# EUROPEAN PATENT APPLICATION

(11) **EP 1 103 352 A1**
(43) Date of publication of application: **30.05.2001**
(21) Application number: 00900430.0
(22) Date of filing: 18.01.2000
(51) Int. Cl.: B25J 13/00, B25J 5/00, B62D 57/02, G05B 13/02

(54) **ROBOT, MAIN UNIT OF ROBOT, AND COUPLING UNIT OF ROBOT**

(30) Priority: 18.01.1999 JP 958299
(71) Applicant: Sony Corporation, Tokyo 141-0001 (JP)
(72) Inventor: TAKAMURA, Seiichi Sony Corporation, Shinagawa-ku Tokyo 141-0001 (JP)
(74) Representative: Horner, David Richard
(86) International application number: PCT/JP00/00196
(87) International publication number: WO 00/41853

(57) **Abstract**

By storing input information and a history of actions of coupling units themselves out of histories of actions of a robot apparatus as a whole in response to said input information as learned data in memory means, it is possible to realize a robot apparatus which is capable of determining actions of coupling units adopted by exchange using learned data of a new coupling unit with no modification even when a coupling unit is exchanged for another, thereby being remarkably enhanced in convenience of use as compared with that of a conventional robot apparatus.

## Description

### Technical Field

The present invention relates to a robot apparatus, a main unit of a robot apparatus and a coupling unit of a robot apparatus, and is preferably applied to an autonomous type robot apparatus which determines actions by itself, for example, on the basis of information from outside.

### Background Art

There has recently been proposed an autonomous type robot apparatus which determines actions by itself on the basis of command signals supplied from an external control device and ambient image information input from a sensor installed at a predetermined position. This autonomous type robot apparatus is configured by acting at random at first when the command signals and image information are input from the control device and the sensor, but gradually come to carry out actions which are suited to the input command signals and image information as the robot apparatus repeats such actions progressively.

Speaking concretely of the autonomous robot, it progressively stores not only the input command signals and image information but also information of the actions carried out by the robot apparatus as learned data into internal memory means when the command signals and image information are input from the control device and the sensor and the robot apparatus carries out the actions at random. When a command signal identical to a command signal which is input in the past and stored in the memory means is input subsequently, the autonomous type robot apparatus evaluates past learned data stored in the memory means and newly learned data respectively on the basis of predetermined parameters.

When the autonomous type robot apparatus judges that the newly learned data has a value higher than that of the past learned data as a result, the robot apparatus deletes the past learned data from the memory means and newly stores the newly learned data or when the robot apparatus judges that the past learned data has a value higher than that of the newly learned data, on the other hand, the robot apparatus leaves the past learned data in the memory means and cancels the newly learned data. By accumulating learned data while writing learned data gradually into the memory means as described above, the autonomous type robot apparatus acquires a capability to autonomously determine actions according to commands given from outside. As a mode to store the learned data in this case, the autonomous type robot apparatus adopts a centralized management mode in which the learned data is stored and managed in single memory means.

Though there exists an integral type robot apparatus which requires no removal of each unit as such an autonomous type robot apparatus, there has recently been considered a robot apparatus which comprises a plurality of units. As the robot apparatus comprising a plurality of units, there has been proposed a robot apparatus which is configured, for example, by coupling a head member unit corresponding to a head of an animal, a main member unit corresponding to a body and manipulator member units corresponding to feet.

The robot apparatus configured by the plurality of units is actually composed by combining desired units which are selected from among a head member unit group comprising a plurality of head member units, a main member unit group comprising a plurality of main member units and a manipulator member unit group comprising a plurality of manipulator member units. When the robot apparatus in this condition requires exchange of the head member unit, for example, the robot apparatus permits modifying a combination of the units by selecting a desired head member unit from the head member unit group and exchanging a currently coupled head member unit for the head member unit selected from the head member unit group.

When the robot apparatus which comprises the plurality of units adopts the centralized management mode as the mode to store the learned data, the robot apparatus is configured by storing and managing the learned data in memory means of the main member unit. When the manipulator member unit, for example, is exchanged for another manipulator member unit which has a different function in such a robot apparatus after the robot apparatus has acquired learned data at a degree sufficient to enable autonomous actions, it is impossible that the memory means of the main member unit stores learned data sufficient to allow the other manipulator member unit to sufficiently exhibit its function after exchange. In this case, the robot apparatus must newly acquire learned data for the manipulator member unit from the beginning after the exchange, thereby posing a problem that the robot apparatus requires labor and time to acquire the learned data.

### Disclosure of the Invention

The present invention has been achieved in view of points described above and proposes a robot apparatus which is capable of remarkably enhanced convenience of use as compared with that of a conventional robot apparatus.

In order to solve such a problem, the present invention provides a robot apparatus which is configured by combining and coupling desired coupling units selected out of a plurality of kinds of coupling units and autonomously carries out predetermined actions on the basis of input information input from outside, in which memory means is built in the coupling units to store as learned data input information and an action history of the coupling units themselves corresponding to the input information out of the input information and action histories of the robot apparatus as a whole corresponding to the input information.

By storing the input information and the action history of the coupling units themselves corresponding to the input information out of the input information and the action histories of the robot apparatus as a whole corresponding to the input information as the learned data in the memory means, the robot apparatus is capable of determining actions of a new coupling unit adopted by exchange using the learned data of the new coupling unit with no modification even when a coupling unit is exchanged and eliminating a necessity to acquire learned data for the new coupling unit from the beginning after the exchange, thereby saving labor and a time for acquiring the learned data. The robot apparatus is therefore capable of determining the actions of the new coupling unit adopted by the exchange using the learned data of the new coupling unit with no modification even when the coupling unit is exchanged, thereby exhibiting convenience of use remarkably higher than that of the conventional robot apparatus.

Furthermore, the present invention provides a robot apparatus which is configured by combining and coupling desired coupling units out of coupling units existing in a plurality of kinds and carries out predetermined actions on the basis of input information given from outside, wherein the robot apparatus comprises action control means for carrying out actions matched with combinations of the coupling units on the basis of the input information given from outside, memory means which stores as combined learned data combinations of the coupling units and a history of actions of the action control means on the basis of the input information and output means which reads out the combined learned data from the memory means and outputs the combined learned data outside as occasion demands.

Since the combinations of the coupling units and the history of actions of the action control means on the basis of the input information are stored as the combined learned data by the memory means and the combined learned data is read out of the memory means and output outside by way of the output means as occasion demands, a user can easily judge combinations which are suited to execution of desired actions. Accordingly, the robot apparatus can have convenience of use which is remarkably higher than that of the conventional robot apparatus.

### Brief Description of the Drawings

Figure 1 is a schematic diagram showing an embodiment of the robot apparatus according to the present invention.
Figure 2 is a schematic diagram showing groups of units for composing a robot apparatus.
Figure 3 is a block diagram showing a circuit configuration for a robot apparatus preferred as a first embodiment of the present invention.
Figure 4 is a flow chart showing steps of fusing learned data in the first embodiment.
Figure 5 is a flow chart showing steps of generating combined learned data.
Figure 6 is a block diagram showing a circuit configuration for a robot apparatus preferred as a second embodiment.
Figure 7 is a conceptional diagram descriptive of various kinds of tables accommodated in memory sections of units.
Figure 8 is a conceptional diagram descriptive of a status conversion table.
Figure 9 is a conceptional diagram showing an action determining table and an evaluation value table.
Figure 10 is a conceptional diagram descriptive of an action conversion table.
Figure 11 is a block diagram descriptive of processings by a CPU in a main member unit in the second embodiment.
Figure 12 is a flow chart descriptive of steps of fusing learned data in the second embodiment.

### Best Mode for Carrying Out of the Invention

An embodiment of the present invention will be detailed below with reference to the accompanying drawings.

### (1) First Embodiment

### (1-1) Configuration of Robot Apparatus

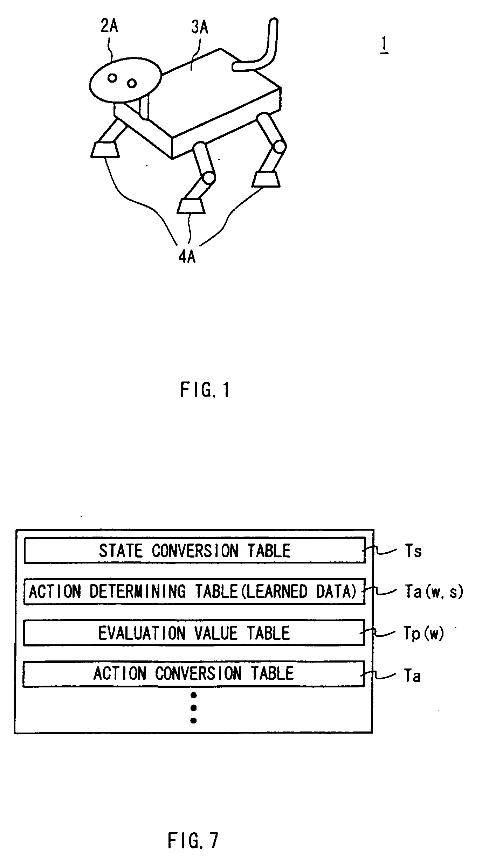

In Figure 1, reference numeral 1 denotes a robot apparatus as a whole which is configured by coupling a head member unit 2A corresponding to a head of an animal, a main member unit 3A corresponding to a body and a manipulator member unit 4A corresponding to a foot, and manages learned data for autonomously determining actions distributed among the units.

The robot apparatus 1 is configured by selecting the head member unit 2A from a head member unit group 2 which comprises plural kinds of head member units 2A to 2C, selecting the main member unit 3A from a main member unit group 3 comprising plural kinds of main member units 3A and 3B and selecting the manipulator member units 4A from a manipulator member group 4 comprising plural kinds of manipulator member units 4A to 4D, and coupling selected member units in a predetermined condition.

The robot apparatus 1 is configured by permitting, when it is necessary to exchange the manipulator member unit 4A, modifying a combination of the units by selecting manipulator member units 4C, for example, from the manipulator member unit group 4 and exchanging the currently coupled manipulator member unit 4A.

The manipulator member unit 4A is a unit which has a function to run quickly at short steps, whereas the manipulator member unit 4C is a unit which has a function to catch a target object and learned data acquired by each unit comprises data allowing the unit to exhibit its function. Accordingly, the robot apparatus 1 cannot allow the manipulator member 4C to sufficiently exhibit its function by applying learned data acquired by the manipulator member unit 4A to the manipulator member unit 4C after the manipulator member unit 4A has been exchanged for the manipulator member unit 4C. The robot apparatus 1 is therefore configured to manage learned data distributed among the units so that a new unit adopted by exchange can sufficiently exhibit its function even when a unit is exchanged.

### (1-2) Circuit Configuration of Robot Apparatus

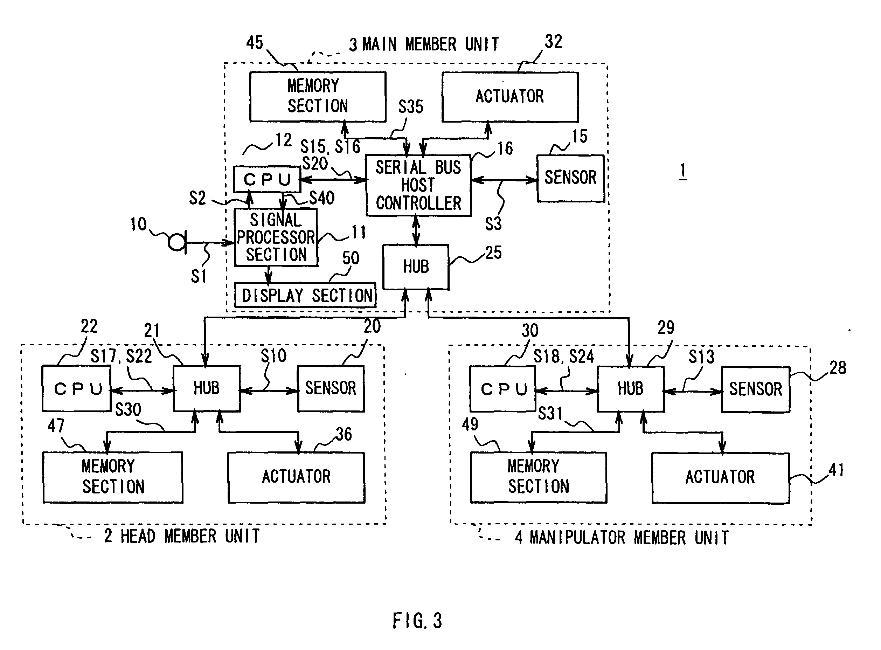

Successively, Figure 3 shows a circuit configuration of the robot apparatus 1. When a user gives a target action by issuing a desired voice first, the main member unit 3 collects a sound with a microphone 10 and inputs a voice signal S1 obtained as a result into a signal processor 11. The signal processor 11 performs a predetermined processing of the voice signal S1 and sends out target action data S2 corresponding to the above described target action to a CPU (central processing unit) 12 provided as action control means.

The main member unit 2 picks up an image of surrounding conditions with a sensor 15 which is composed of a CCD (Charge Coupled Device) camera and sends out observation data S3 comprising image data thus obtained to the CPU 12 by way of a serial bus host controller 16 which manages a bus. At this time, the head member unit 2 sends out observation data S10 comprising image data obtained by way of a sensor 20 composed of a CCD camera to the main member unit 3 and a CPU 22 by way of a hub 21. The main member unit 3 inputs the observation data S10 into the CPU 12 by way of a hub 25 and the serial bus host controller 16 consecutively.

Similarly, the manipulator member unit 4 sends out observation data S13 which is obtained by way of a sensor 28 which is composed of a CCD camera, a potentiometer, a sensor or the like to the main member unit 3 and CPU 30 by way of a hub 29, and to the CPU 12 by way of the hub 25 and the serial bus host controller 16 of the main member unit 3.

When the target action data S2 is input, the CPU 12 first generates a driving signal S15 for operating the robot apparatus 1 as a whole, then generates a main member driving signal S16 for driving the main member unit 3 on the basis of the driving signal S15 and sends out this signal to an actuator 32 by way of the serial bus host controller 16, thereby driving the actuator 32 to allow the main member unit 3 to carry out an action, for example, of swinging a tail. Simultaneously, the CPU 12 sends out the driving signal S15 to the head member unit 2 and the manipulator member unit 4 by way of the serial bus host controller 16 and the hub 25 consecutively.

The head member unit 2 inputs the driving signal S15 supplied from the main member unit 3 into the CPU 22 by way of the hub 21. On the basis of this driving signal S15, the CPU 22 generates a head member driving signal S17 for driving the head member unit 2 and sends out this signal to an actuator 36 by way of the hub 21, thereby driving the actuator 36 to operate the head member unit 2.

Similarly, the manipulator member unit 4 inputs the driving signal S15 supplied from the main member unit 3 into the CPU 30 by way of the hub 29. On the basis of this driving signal S15, the CPU 30 generates a manipulator member driving signal S18 for driving the manipulator member unit 4 and sends out this signal to an actuator 41 by way of the hub 29, thereby driving the actuator 41 to operate the manipulator member unit 4.

At this time, the CPU 12 of the main member unit 3 stores the target action data S2 input by way of the microphone 10, the observation data S3 input by way of the sensor 15 and the main member driving signal S16 for driving the main member unit 3 into a memory section 45 as learned data S20.

The CPU 12 is configured by sending out the target action data S2 to the head member unit 2 and the manipulator member unit 4 by way of the serial bus host controller 16 and the hub 25 consecutively. When the target action data S2 is supplied from the main member unit 3, the CPU 35 of the head member unit 2 therefore stores the target action data S2, the observation data S10 input by way of the sensor 20 and the head driving signal S17 for driving the head member unit 2 into a memory section 47 as learned data S22.

When the target action data S2 is supplied from the main member unit 3, the CPU 30 of the manipulator member unit 4 stores the target action data S2, the observation data S13 input by way of the sensor 28 and the manipulator member driving signal S18 for driving the manipulator member unit 4 into a memory section 49 as learned data S24.

The robot apparatus 1 stores the learned data into the memory sections 45, 47 and 49 of the units by consecutively repeating the above described operations. When the target action data S2 which is identical to the target action data S2 stored in the memory section 45 is input to operate the robot apparatus 1 subsequently, the CPU 12 of the main member unit 3 evaluates the past learned data S20 stored in the memory section 45 and learned data S20 newly input this time respectively on the basis of a predetermined standard.

As a result, the CPU 12 of the main member unit 3 deletes the past learned data S20 from the memory section 45 and newly stores the learned data S20 newly input this time when the learned data S20 input this time is evaluated higher than the past learned data S20, whereas the CPU 12 allows the past learned data S20 to remain in the memory section 45 and cancels the learned data S20 acquired this time when the past learned data S20 is evaluated higher than the newly input learned data S20.

Similarly, the CPU 22 of the head member unit 2 accumulates the learned data S22 while updating the learned data S22 stored in the memory section 47 and the manipulator member unit 4 accumulates the learned data S24 while updating the learned data S24 stored in the memory section 49.

The robot apparatus 1 acquires a capability to determine actions suited to commands given from outside by gradually acquiring the learned data as described above and adopts, as a mode to manage acquired learned data, an object-oriented learning mode to manage the learned data distributed among the units.

### (1-3) Fusion of Learned Data

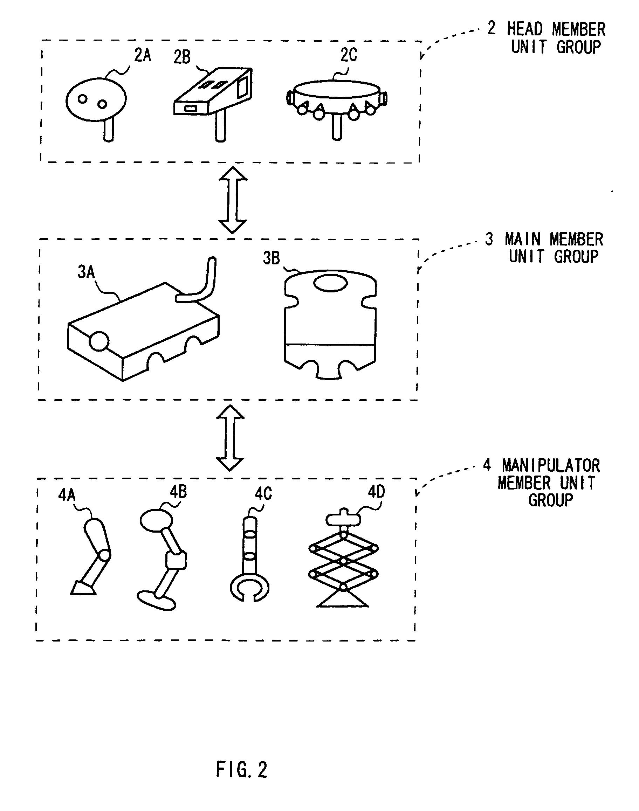

With reference to the manipulator member units 4A and 4C which store the learned data acquired by repeating the above described operations (Figure 2), description will be made of a case where newly learned data is to be generated (hereinafter referred to as fused) on the basis of the learned data stored in the manipulator member unit 4A and the learned data stored in the manipulator member unit 4C, and the fused learned data is to be stored into the manipulator member unit 4C.

When the user couples the manipulator member unit 4A with the main member unit 2A first, the CPU 30 of the manipulator member unit 4A reads out the learned data S24 from the memory section 49 of the manipulator member unit 4A, and transfers and stores the data into the memory section 45 by way of the hub 29, the hub 25 of the main member unit 3A and the serial bus host controller 16 consecutively.

Then, the user decouples the manipulator member unit 4A from the main member unit 2A and newly couples the manipulator member unit 4C with the main member unit 2A. Upon coupling, the CPU 30 of the manipulator member unit 4C reads out the learned data S24 from the memory section 49 of the manipulator member unit 4C, and transfers and stores the data into the memory section 45 by way of the hub 29, the hub 25 of the main member unit 3A and the serial bus host controller 16 consecutively.

The CPU 12 which is learned data fusing means for the main member unit 3A comprises a work area such as a memory, reads out learned data for the manipulator member unit 4A and learned data for the manipulator member unit 4C from the memory section 45, and transfers the data to the work area. The CPU 12 generates new learned data, that is, fused learned data by fusing the learned data for the manipulator member unit 4A with the learned data for the manipulator member unit 4C in the work area, and transfers and stores the generated fused learned data into the memory section 49 of the manipulator member unit 4C by way of the serial bus host controller 16, the hub 25 and the hub 29 of the manipulator member unit 4C consecutively.

Accordingly, the manipulator member unit 4C has not only an action ability on the basis of learned data acquired by itself but also an action ability on learned data acquired by the manipulator member unit 4A, thereby being capable of enhancing an action capability of itself without requiring learning actions.

### (1-4) Data Format of Learned Data

Now, description will be made here of a data format of the learned data. The learned data S24 acquired by the manipulator member unit 4 consists, for example, of command data T indicating the target action data S2 commanded by the user, a vector g indicating a state of the observation data S13 input from the sensor 28 and a vector a indicating the manipulator member driving signal S18 to be supplied to the actuator 41, and is represented as (data T, vector g and vector a).

Speaking concretely, the command data T which indicates the target action data S2 is data indicating, for example, "advance," "kick," "jump" or the like. The vector g which indicates the state of the observation data S13 input from the sensor 28 is represented as a status vector having in dimensions of G^{m} = {g (1), g (2), g (3), ..., g (m)} wherein m represents the number of states, that is, a kind of character amount of the observation data S13. The action vector a which indicates the manipulator member driving signal S18 to be supplied to the actuator 41 is represented as an action vector having n dimensions of Aⁿ = {a (1), a (2), a (3),..., a (n)} wherein n corresponds to the number of motors in the manipulator member unit 4.

Taking the learned data for the manipulator member unit 4A and the learned data for the manipulator member 4B as (data T₁, vector g₁, vector a₁) and (data T₂, vector g₂, vector a₂) respectively, description will successively be made of a case where the data is fused and stored into the manipulator member unit 4B. In this case, the CPU 12 of the main member unit 3 does not need to carry out a fusing processing when the learned data (data T₁, vector g₁, vector a₁) is identical to the learned data (data T₂, vector g₂, vector a₂) and stores either of the data as the fused learned data.

When the command data T₁ is identical to the command data T₂ and the state vector g₁ is different from the state vector g₂ and/or the action vector a₁ is different from the action vector a₂, the CPU 12 of the main member unit 3 evaluates the learned data respectively on the basis of an evaluating function using a time and a power consumption required for an action to be taken on the basis of a given command as parameters, selects and stores either of the learned data whichever has a higher evaluation result as fused learned data, and cancels learned data which has a lower evaluation result. When the command data T₁ is different from the command data T₂, that is, when target actions are different, the CPU 12 of the main member unit 3 stores both the learned data (data T₁, vector g₁, vector a₁) and learned data (data T₂, vector g₂, vector a₂) as fused learned data.

When the CPU 12 of the main member unit 3 fuses learned data "shoot action" for the manipulator member unit 4A with learned data "pass action" for the manipulator member unit 4B, for example, the CPU 12 generates fused learned data "shoot and pass actions." When the CPU 12 of the main member unit 3 fuses learned data "navigation ability from point A to point B" for the head member unit 4A with learned data "navigation ability from point B to point C" for the head member unit 4B, the CPU 12 generates fused learned data "navigation ability from point A to point C." By fusing the learned data as described above, the CPU 12 of the main member unit 3 enhances an ability of each unit. (1-5) Learning Processing of Combination of Units Suited to Target Action

Description will be made here of the so-called strengthened learning processing which determines a combination of the units suited to a given target action and generates combined learned data. After the user gives a target action to the main member unit 3A, the user configures the robot apparatus 1 (Figure 1) by coupling, for example, the head member unit 2A, the main member unit 3A and the manipulator member unit 4A.

The CPU 22 of the head member unit 2A reads out identification information S30 for indicating the head member unit 2A from the memory section 47, and sends out this information to the CPU 12 by way of the hub 21, the hub 25 of the main member unit 3A and the serial bus host controller 16. Furthermore, the CPU 30 of the manipulator member unit 4A reads out identification information S31 for indicating the manipulator member unit 4A from the memory section 49, and sends out this information to the CPU 12 by way of the hub 29, the hub 25 of the main member unit 3A and the serial bus host controller 16.

The CPU 12 of the main member unit 3A reads out identification information S35 for identifying the main member unit 3A from the memory section 45, stores the identification information S35 of the main member unit 3A, the identification information S30 of the head member unit 2A and the identification information S31 of the manipulator member unit 4A into the memory section 45 as coupling information indicating a current combination of the units, sets a target on the basis of the target action data S2 and executes an action.

At this time, the CPU 12 of the main member unit 3A judges whether or not executed action was successful taking the set target as standard. When the CPU 12 judges that the executed action was successful as a result, the CPU 12 sends out the target action data S2 given from outside to the memory section 45 taking that the current combination of the units is suited to the target action, thereby storing the target action data S2 and the above described coupling information into the memory section 45 as the combined learned data.

When the CPU 12 judges that the executed action failed, in contrast, the CPU 12 generates an execution result signal S40 indicating failure of the action, performs a predetermined processing of this signal with the signal processor 11 and sends out the signal to a display section 50 provided as output means composed of a liquid crystal display to allow it to display "Task failed. Exchange unit." When the user exchanges the manipulator member unit 4A, for example, according to the display, the CPU 12 of the main member unit 3A updates and stores coupling information S37 in the memory section 45, and executes the target action once again. By repeating such actions, the robot apparatus can acquire learned data comprising combinations of the units suited to target actions given from the user.

### (1-6) Steps of Fusing Learned Data and Steps of Generating Combined Learned Data by CPU 12 of Main Member Unit 3

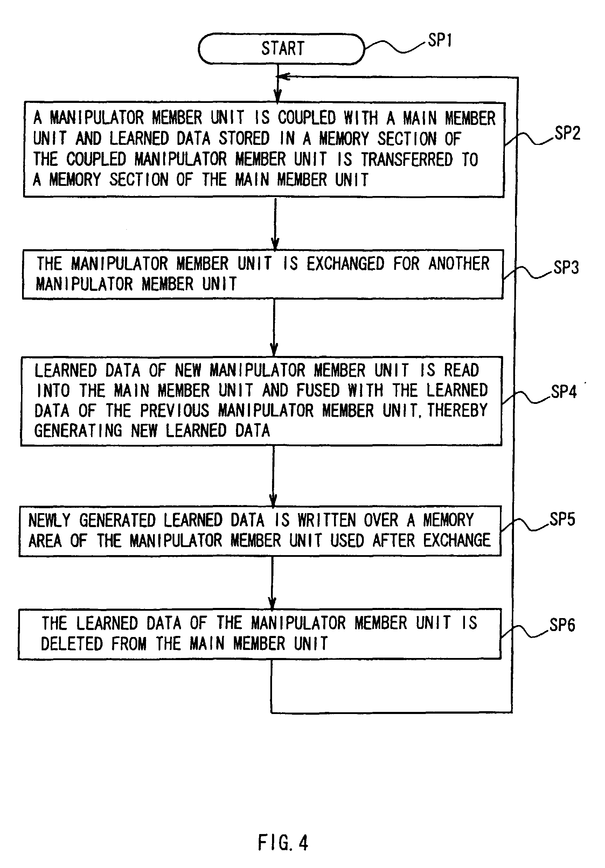

Using a flow chart shown in Figure 4, description will be made of steps of fusing learned data, for example, steps of fusing learned data S24 of the manipulator member unit 4A (Figure 2) with the learned data S24 of the manipulator member unit 4B (Figure 2). By the way, learned data of the other units are fused similarly but will not be described in particular.

When the manipulator member unit 4A is coupled with the main member unit 3A at a step SP2 entering from a step SP1 first, the CPU 12 of the main member unit 3A reads out the learned data S24 from the memory section 49 of the manipulator member unit 4A by way of the hub 25 and transfers the learned data S24 to the memory section 45.

At a step SP3, the CPU 12 recognizes that the user detaches the manipulator member unit 4A from the main member unit 3A and newly attaches the manipulator member unit 4B to the main member unit 3A for exchange, and proceeds to a next step SP4. At the step SP4, the CPU 12 of the main member unit 3A reads out the learned data S24 from the memory section 49 of the manipulator member unit 4B which is newly attached and transfers the data to the memory section 45, thereafter generating fused learned data by fusing learned data of the manipulator member unit 4A with learned data of the manipulator member unit 4B and storing the fused learned data into the memory section 45.

At a successive step SP5, the CPU 12 of the main member unit 3A sends out generated fused learned data to the memory section 49 of the manipulator member unit 4B by way of the hub 25, thereby storing the data in the memory section 49 by superscription. At a step SP6, the CPU 12 of the main member unit 3A deletes fused learned data stored in the memory section 45 and returns to the step SP1 to repeat operations.

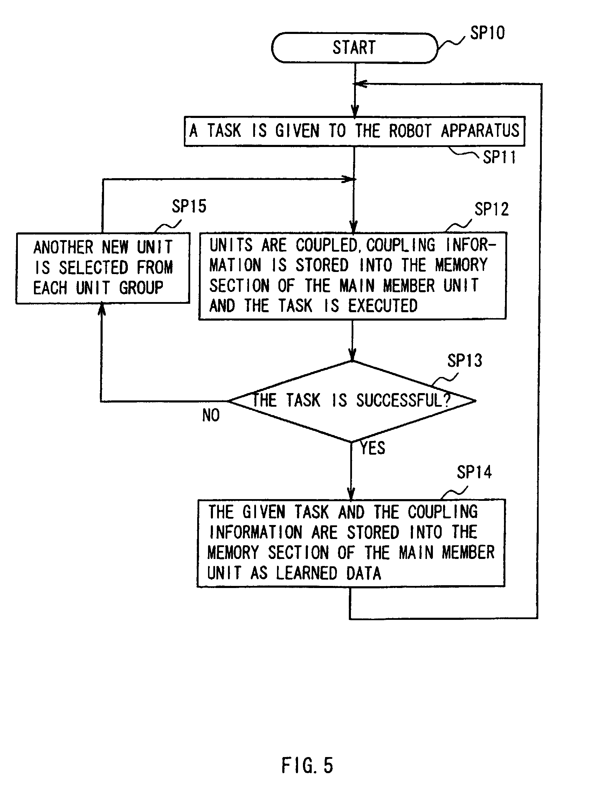

Description will successively be made of steps of generating the combined learned data using a flow chart shown in Figure 5. When the target action data S2 is given outside at a step SP11 entering from a step SP10 and when desired units, for example, the head member unit 2A and the manipulator member unit 4A, are coupled at a step SP12, the CPU 12 of the main member unit 3A stores coupling information indicating a combination of the units at this time into the memory section 45, sets a target on the basis of the target action data S2 and executes a task matched with a target action.

At a step SP13, the CPU 12 of the main member unit 3A judges whether or not the executed task was successful taking the set target as standard. As a result, when the CPU 12 of the main member unit 3A judges that the task was successful, the CPU 12 proceeds to a step SP14 or when the CPU 12 judges that the task failed, the CPU 12 proceeds to a step SP 15.

Taking that the current combination is suited to the given target action at the step SP14, the CPU 12 of the main member unit 3A stores as combined learned data the target action and the above described coupling information into the memory section 45. At the step SP15, in contrast, the CPU 12 of the main member unit 3A allows the display section 50 to display a predetermined message, thereby urging the user to exchange the unit. When the user exchanges the unit according to an indication on the display section 50, the CPU 12 of the main member unit 3A returns to the step SP 12 to repeat the above described operations.

### (1-7) Operations and Effects of the Embodiment

The robot apparatus 1 which has the above described configuration is capable of preliminarily acquiring learned data for autonomously determining actions to be taken according to the user's commands and surrounding conditions, managing the acquired learned data distributed among the memory sections of the units composing the robot apparatus 1 and fusing the learned data acquired by the units used before the exchange with learned data of units used after the exchange when a unit is exchanged for another, thereby eliminating the necessity to acquire learned data corresponding to the learned data acquired by the units before the exchange from the beginning once again after the exchange, and saving labor and time required for acquiring the learned data.

Furthermore, the robot apparatus 1 is capable of preliminarily acquiring combined learned data representing combinations of the units suited to execution of target actions given by the user and informing the user of a combination corresponding to a target action indicated by a command of the user when it is given, thereby allowing the user to easily judge a combination of units suited to an action to be taken as desired.

The above described configuration makes it possible to preliminarily acquire learned data for autonomously determining actions according to information given from outside, manage the acquired learned data distributed among units and fuse learned data acquired by units to be exchanged for learned data of other units, thereby enabling to save a time and labor required for acquiring learned data, and realize the robot apparatus 1 which has enhanced in convenience of use.

Furthermore, the above described configuration makes it possible to preliminarily acquire combined learned data for determining combination of units according to commands given by the user and inform the user of a combination corresponding to a command of the user when it is given, thereby allowing the user to easily judge a combination suited to execution of an action desired by the user and realize the robot apparatus 1 which is enhanced in convenience of use.

### (2) Second Embodiment

### (2-1) Configuration of Robot Apparatus in Second Embodiment

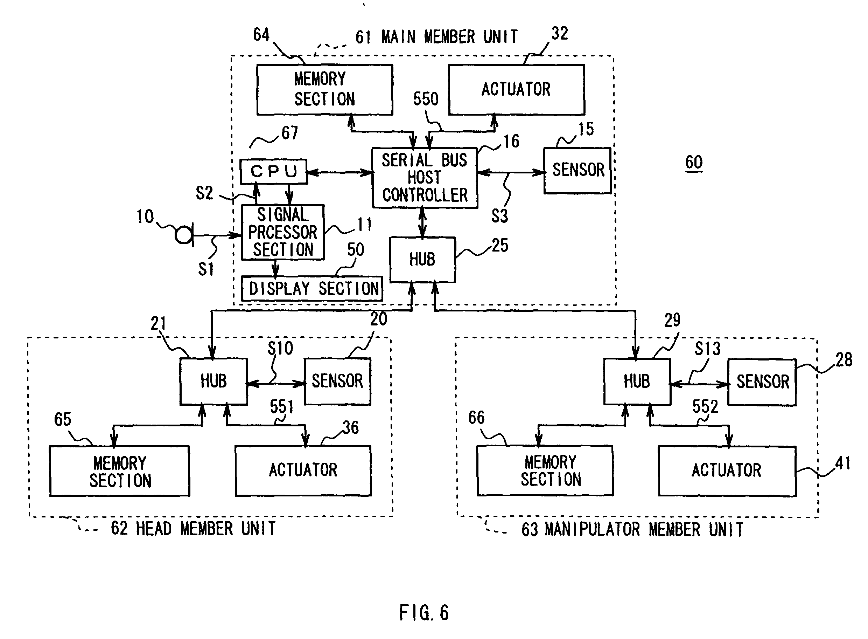

Figure 6 in which members corresponding to those shown in Figure 2 are represented by the same reference numerals shows a robot apparatus 60 preferred as a second embodiment which is configured nearly similarly to the robot apparatus 1 shown in Figure 1, except for various kinds of tables of data which are accommodated in memory sections 45, 47 and 49 of a main member unit 61, a head member unit 62 and a manipulator member unit 63 to be described later, and the head member unit 62 and the manipulator member unit 63 which do not use a CPU.

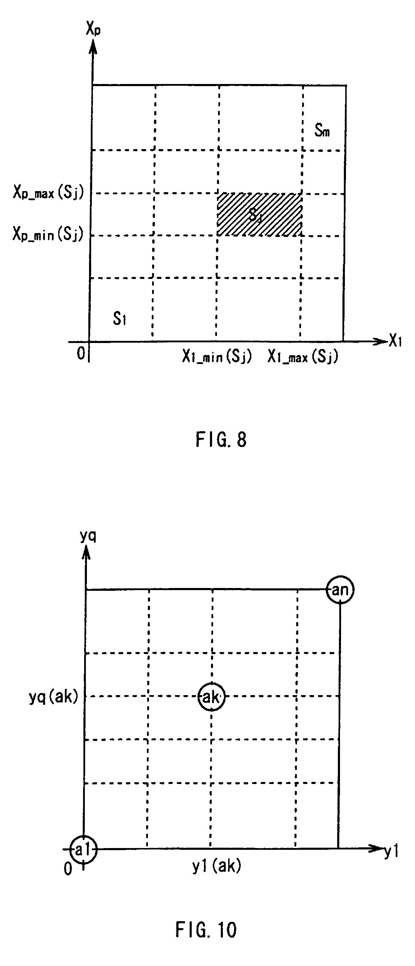

Speaking concretely of a case of the robot apparatus 60, data of a state conversion table Tₛ, an action determining table Tₐ(_{w,s}) as learned data, an evaluation value table T_{p(w)} and an action conversion table Tₐ are accommodated in memory sections 64 through 66 respectively of the main member unit 61, the head member unit 62 and the manipulator member unit 63 as shown in Figure 7.

In this case, the state conversion table Tₛ is a table for recognizing preliminarily determined states such as "a ball is present in the right forward vicinity" on the basis of observation data S3, S10 and S13 output from sensors 15, 20 and 28 in the units. In case of the second embodiment, each state Sⱼ (j = 1, 2,..., m) is defined by equations shown below taking the number of sensors in the units and the number of the determined states as p and m respectively as shown in Figure 8:

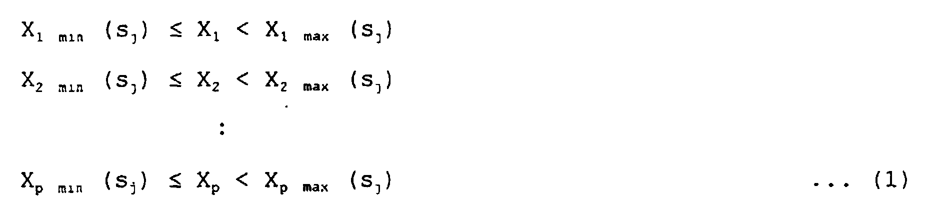

Described as the state conversion table Tₛ in corresponding areas of the memory sections are numerical values in a number 2 × P × m expressed by an equation (2) shown below which comprises upper limit values (X₁ ₘₐₓ (sⱼ) to X_{p max} (sⱼ)) and lower limit values (X₁ ₘᵢₙ (sⱼ) to X_{p min} (sⱼ)) of observation data values X₁ to Xₚ corresponding to each state sⱼ in equation (1) for discretion:$\text{2 × P × m}$

Figure 8 corresponds to a case of P = 2 and represents that a condition of sⱼ corresponds to an area given by the following equation (3) (an area slashed in Figure 8):$\begin{matrix}\begin{matrix}{\text{X}}_{\text{1}} {}_{\text{min}} {\text{(s}}_{\text{j}} {\text{) ≤ X}}_{\text{1}} {\text{< X}}_{\text{1 max}} {\text{(s}}_{\text{j}} \text{) and} \\ {\text{X}}_{\text{p min}} {\text{(s}}_{\text{j}} {\text{) ≤ X}}_{\text{p}} {\text{< X}}_{\text{p max}} {\text{(s}}_{\text{j}} \text{)}\end{matrix}\end{matrix}$

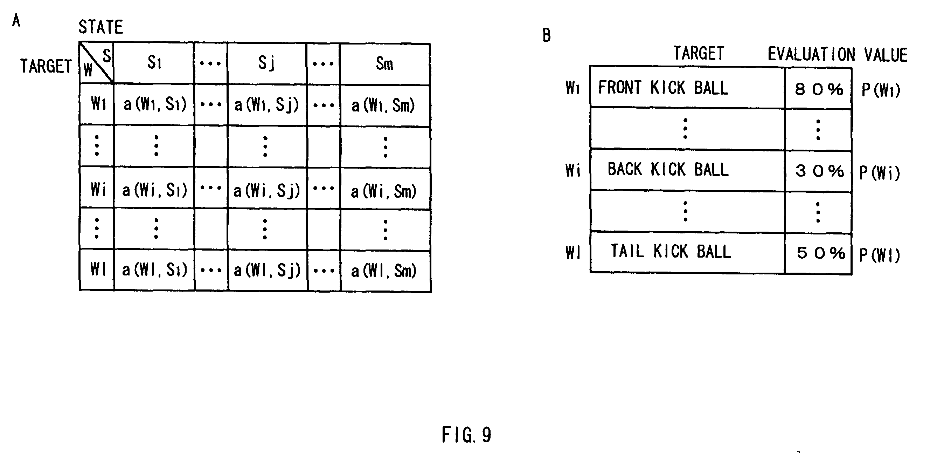

Furthermore, the action determining table T_{a(w,s)} is a table for determining an action to be output according to the state sⱼ which is recognized using the state conversion table Tₐ and the target action wᵢ (i = 1, 2, ..., l) to be given from outside and accommodates data as shown in Figure 9A so that an action aₖ (wᵢ, sⱼ) (k = 1, 2, ..., n) which has so far been obtained by learning and is optimum to be output dependently on the state sⱼ out of a plurality of actions aₖ for the target action wᵢ corresponds to the target action wᵢ which is specified by the user and obtained on the basis of the target action data S2 (Figure 6).

In a case where a condition sⱼ "a ball is present in the right forward vicinity" is recognized and a target action wᵢ "kick the ball with a forefoot" is given, for example, there can be two output actions aₖ of "kicks the ball with a right forefoot" and "kicks the ball with a left forefoot," but the action determining table T_{a(w,s)} accommodates the data so that the action aₖ (wᵢ, sⱼ) "kicks the ball with the right forefoot," for example, which is selected out of these selectable actions by learning described later corresponds to the state sⱼ "a ball is present in the right forward vicinity" and the target action wᵢ "kick the ball with a forefoot."

Furthermore, the evaluation value table T_{p(w)} is a table which describes evaluation values p(wᵢ) calculated on the basis of a ratio of success and performance time of the action aₖ (wᵢ, sⱼ) which corresponds to the target action wᵢ in the action determining table T_{a(w,s)} as shown in Figure 9B.

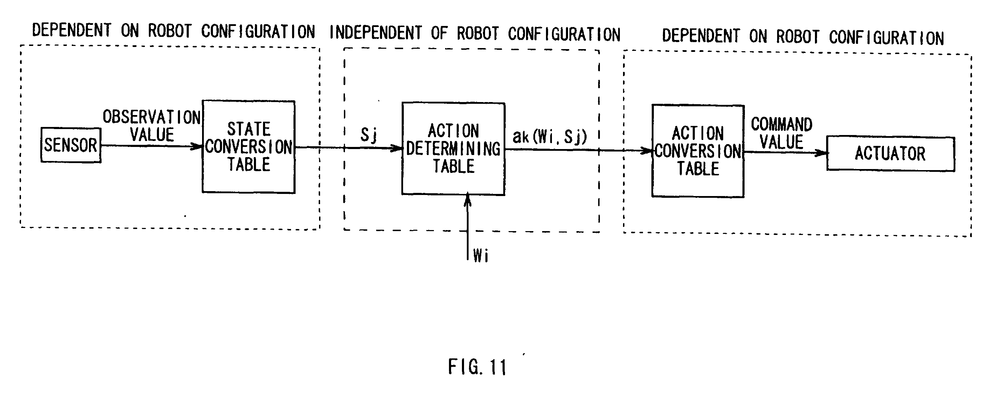

Furthermore, the action conversion table Tₐ is a table which converts the action aₖ (wᵢ, sⱼ) determined using the action determining table T_{a(w,s)} into command value for the actuators 15, 20 and 28 in the units. In case of the second embodiment wherein actuators 32, 36 and 41 in a number of q are disposed in the units as shown in Figure 10, command values y₁ (aₖ) to y_{q} (aₖ) for the actuators 32, 36 and 41 for each action ak (Wᵢ, Sⱼ) are accommodated as expressed by the following equation (4):${\text{a}}_{\text{k}} {\text{= {Y}}_{\text{1}} {\text{(a}}_{\text{k}} {\text{), Y}}_{\text{2}} {\text{(a}}_{\text{k}} {\text{), ..., Y}}_{\text{q}} {\text{(a}}_{\text{k}} \text{)}}$

Figure 10 corresponds to a case of q=2, and represents, for example, that a command value of y₁ (aₖ) corresponds to first actuators 32, 36 and 41 in the units and a command value of y_{q} (aₖ) corresponds to second actuators 32, 36 and 41 for each action aₖ (wᵢ, sⱼ).

In case of the robot apparatus 60, the state conversion table Tₛ and the action conversion table Tₐ out of the state conversion table Tₛ, the action determining table T_{a(w,s)} and the action conversion table Tₐ are configured dependently on configurations of the units, whereas the action determining table T_{a(w,s)} is configured independently of the configurations of the units.

In the robot apparatus 60, a CPU 67 of the main member unit 61 reads out at initial step data of the state conversion table Tₛ, the action determining table T_{a(w,s)}, the evaluation value table T_{p(w)} and the action conversion table Tₐ stored in the memory section 65 of the head member unit 62 and the memory section 66 of the manipulator member unit 63 respectively, and stores the data into the memory section 64 of the main member unit 61.

On the basis of the observation data S3, S10 and S13 given from the sensors 15, 20 and 28 of the units (main member unit 61, head member unit 62 and manipulator member unit 63) as well as the state conversion table Tₛ of the units accommodated in the memory section 64, the CPU 67 always monitors the state sⱼ recognized by the units on the basis of outputs from the sensors 15, 20 and 28 in the units as shown in Figure 11.

When the target action wᵢ is given as the target action data S₂ subsequently, the CPU 67 determines the action aₖ (wᵢ, sⱼ) corresponding to each unit in the action determining table T_{a(w,s)} as the output action of the unit on the basis of the state sⱼ of the unit recognized as described above and the action determining table T_{a(w,s)} of the unit accommodated in the memory section 64.

Furthermore, the CPU 67 determines command values y₁ (aₖ) to y_{q} (aₖ) for the actuators 32, 36 and 41 in each unit on the basis of a determined result and the corresponding action conversion table Tₐ, and sends out driving signals S50 to S52 on the basis of a determined result to the corresponding actuators 32, 36 and 41 by way of the serial bus host controller 16 and corresponding buses 21 and 29, and drives the actuators, thereby driving the unit.

When the target action wᵢ is given as the target action data S2, on the other hand, the CPU 67 determines as the output action an action aₖ which is not described in the action determining table T_{a(w,s)} with a predetermined probability out of some actions aₖ corresponding to the target action wᵢ instead of the processing described above.

On the basis of a determined result and a corresponding action conversion table Tₐ, the CPU 67 determines the command values y₁ (aₖ) through y_{q} (aₖ) for the actuators 32, 36 and 41 in the units and sends out driving signals S50 through S52 on the basis of a determined result to corresponding actuators 32, 36 and 41 by way of the serial bus host controller 16 and corresponding buses 21 and 29, and drives the actuators, thereby driving the unit.

Furthermore, the CPU 67 thereafter calculates an evaluation value ₚ (wᵢ)'of the action aₖ of the unit output at that time on the basis of a ratio of success, a performance time or the like of the action aₖ.

Only when as evaluation value p (w₁)' calculated for the unit is higher than an evaluation value p (wᵢ) of the target action wᵢ described in a corresponding evaluation value table T_{p(w)}, the CPU 67 rewrites a corresponding action aₖ (wᵢ, sⱼ) in the action determining table T_{a(w,s)} accommodated in the memory sections 64 though 66 in a corresponding unit into the action aₖ output at this time and rewrites a corresponding evaluation value p (wᵢ) in the evaluation value table Tp(w) accommodated in the memory sections 64 through 66 into the evaluation value p(wᵢ)' corresponding to the action aₖ which is calculated as described above.

The robot apparatus 60 is configured to modify the action aₖ (wᵢ, sⱼ) which corresponds to the state sⱼ at that time and the target action wᵢ given from outside in the action determining table T_{a(w,s)} progressively into an action aₖ having a higher evaluation value p(wᵢ), thereby being always capable of carrying out an optimum action.

### (2-2) Steps of Fusing Learned Data in Second Embodiment

Now, description will be made of processings which are carried out by the CPU 67 of the main member unit 61 to fuse learned data (data in the action determining table T_{a(w,s)} of a unit used before exchange with learned data (data in the action determining table) of a unit used after exchange when a unit is exchanged for another unit of the same kind.

In description that follows, the action determining table T_{a(w,s)} and the evaluation value table T_{p(w)} of the unit used before the exchange will be represented by T_{a(w,s)A} and T_{p(w)A} respectively, whereas the action determining table T_{a(w,s)} and the evaluation value table T_{p(w)} of the unit used after the exchange will be designated by T_{a(w,s)B} and T_{p(w)B} respectively.

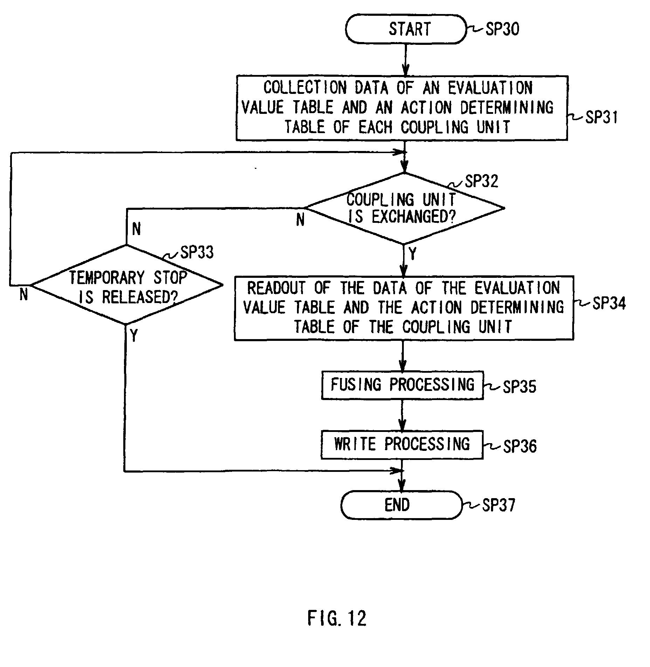

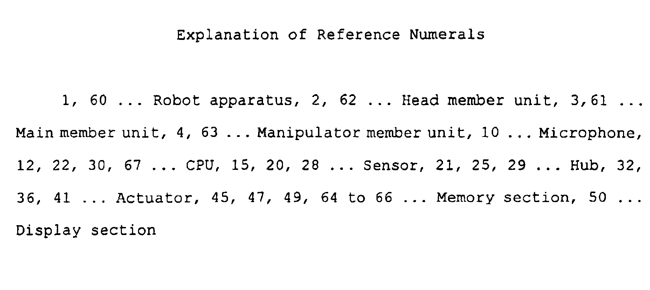

In case of the second embodiment, the CPU 67 of the main member unit 61 fuses the learned data of the unit used before the exchange with the learned data of the unit used after the exchange according to a learned data fusing processing shown in Figure 12.

When a temporary stop button (not shown) disposed on the robot apparatus 60 is depressed to set a temporary stop mode, the CPU 67 starts the process to fuse the learned data at a step SP30, reads out the data of the evaluation value table T_{p(w)A} and the action determining table T_{a(w,s)A} of each unit from the memory sections 64 through 66 of the unit at a successive step SP31, and stores the data into the memory section 64 of the main member unit 61.

Successively, the CPU 67 proceeds to a step SP31 and judges whether or not any unit has been exchanged. When a negative result is obtained at this step SP32, the CPU 67 proceeds to a step SP33 and judges whether or not the temporary stop mode has been cancelled by depressing the above described temporary stop button.

When a negative result is obtained at the step SP33, the CPU 67 returns to the step SP32 and then repeats a loop of steps SP32-SP33-SP32 until an affirmative result is obtained at the step SP32 or SP33.

When the affirmative result is obtained in a due time at the step SP32, the CPU 67 proceeds to a step SP34, reads out data of the evaluation value table T_{p(w)B} and the action determining table T_{a(w,s)B} accommodated in memory sections 65 and 66 of a new unit which is used after exchange, and stores the data into the memory section 64 of the main member unit 61.

Successively, the CPU 67 proceeds to a step SP34 and executes the processing of fusing the learned data (action determining table T_{a(w,s)A}) of the original unit used before the exchange with learned data (the action determining table T_{a(w,s)B}) of the new unit used after the exchange.

Speaking concretely, the CPU 67 compares the evaluation value table T_{p(w)A} of the original unit used before the exchange with the evaluation value table T_{p(w)B} of the new unit used after the exchange, compares an evaluation value p(wᵢ) in the evaluation value table T_{p(w)A} of the original unit for a target action wᵢ which exists in both the evaluation value table T_{p(w)A} of the original unit and the evaluation value table T_{p(w)B} of the new unit with an evaluation value p(wᵢ) in the evaluation value table T_{p(w)B} of the new unit and performs no processing of the evaluation value of the new unit which is larger.

When the evaluation value of the original unit is larger, in contrast, the CPU 67 modifies all actions aₖ (wᵢ, sⱼ) in all conditions aⱼ for the target action wᵢ in the action determining table T_{a(w,s)B} of the new unit (all the actions aₖ(wᵢ,sⱼ) in a corresponding line of the target action wᵢ in Figure 9A) into an action aₖ(wᵢ, sⱼ) corresponding to a state sⱼ corresponding to the target action wᵢ in the action determining table T_{a(w,s)A} of the original unit, and modifies the evaluation value p(wᵢ) for the target action wᵢ in the evaluation value table T_{p(w)B} of the new unit into a corresponding evaluation value p(wᵢ) in the evaluation value table T_{p(w)A} of the original unit.

Furthermore, the CPU 67 compares the evaluation value table T_{p(w)A} of the original unit used before the exchange with the evaluation value table T_{p(w)B} of the new unit used after the exchange and, in a case where a target action wᵢ exists in the evaluation value table T_{p(w)A} of the original unit and does not exist in the evaluation value table T_{p(w)B} of the new unit, the CPU 67 copies this target action wᵢ and the evaluation value p(wᵢ) for the target action wᵢ in the evaluation table T_{p(w)A} of the original unit into the evaluation value table T_{p(w)B} of the new unit.

After completing the above described fusing processing, the CPU 67 proceeds to a step SP35, transfers data of a new evaluation value table T_{p(w)B}' and a new action determining table T_{a(w,s)B}' which are obtained by the fusing processing to the new unit, stores this data in the memory section 65 and 66 in place of the data of the original evaluation table T_{p(w)B} and the action determining table T_{a(w,s)B} accommodated in the memory section 65 and 66 of the unit, and terminates the fusing processing by proceeding to a step SP36.

When an affirmative result is obtained at the step SP33 also, the CPU 67 terminates the fusing processing by proceeding to the step SP36.

As described above, when a unit is exchanged for another, the robot apparatus 60 is configured to be capable of fusing learned data of an original unit used before exchange with learned data of a new unit used after the exchange, thereby utilizing the learned data acquired by the original unit also in the new unit.

### (2-3) Operations and Effects of Second Embodiment

When the target action wᵢ is given as the target action data S2 in the above configuration, the robot apparatus 60 outputs an action aₖ which is not described in the action determining table T_{a(w,s)} with a predetermined probability out of some actions aₖ corresponding to the target action wᵢ, then evaluates the action aₖ and, in a case where an evaluation result is higher than an action aₖ(wᵢ,sⱼ) described in the action determining table T_{a(w,s)}, rewrites the corresponding action aₖ(wᵢ,sⱼ) in the action determining table T_{a(w,s)} into the action aₖ.

When a unit is exchanged for another, the robot apparatus 60 updates a new action determining table T_{a(w,s)B} by fusing learned data comprising the data of the action determining table T_{a(w,s)A} of an original unit which is obtained as described above with a learned table comprising data of the action determining table T_{a(w,s)B} of the new unit.

Accordingly, the robot apparatus 60 eliminates, like the robot apparatus 1 preferred as the first embodiment after t unit is exchanged, the necessity to acquire learned data from the beginning corresponding to the learned data acquired by the unit used before exchange, thereby being capable of saving the labor and the time required for acquiring the learned data.

The above described configuration is adapted to update the action determining table T_{a(w,s)B} of the new unit after a unit is exchanged by fusing the learned data comprising the data of the action determining table T_{a(w,s)A} of the original unit used before the exchange with the learning table comprising the data of the action determining table T_{a(w,s)B} of the new unit used after the exchange, thereby making it possible, like the first embodiment, to save the labor and the time required for acquiring learned data, thereby realizing a robot apparatus which is enhanced in convenience of use.

### (3) Other Embodiments

Though the first embodiment is described above as a case wherein the fused learned data stored in the memory section 45 is deleted at the step SP6 of the data fusing processing shown in Figure 4, the present invention is not limited by the embodiment and the fused learned data may not be deleted but maintained in a stored condition.

Though the first embodiment is described above as a case wherein the combined learned data is stored in the memory section 45 of the main member unit 3, the present invention is not limited by the embodiment and the combined learned data may be stored in the memory section 45 of the main member unit 3, the memory section 47 of the head member unit 2 and the memory section 49 of the manipulator member section 4, and managed distributedly.

Though the first embodiment is described above as a case wherein a target is set on the basis of the target action data S2 supplied from outside, the present invention is not limited by the embodiment and the target may be set by the robot apparatus itself on the basis of the observation data S3 supplied from the sensor 15 or other various data.

Though the first embodiment is described above as a case wherein the target action given from the user and the combination of units suited to the target action are stored in the memory section 45 as the combined learned data, the present invention is not limited by the embodiment, and data of combinations unsuited to the target action may also be stored in the memory section 45 in addition to the target action and the combination of the units suited to the target action.

Though the first embodiment is described above as a case wherein the target action data S2 given from outside, the image data input by way of the sensor and the driving signal for driving the unit are used as the learned data, the present invention is not limited by the embodiment and an essential point lies in that input information input from outside and an action history of coupling units corresponding to the input information are used as the learned data.

Though the first embodiment is described above as a case wherein the present invention is applied to the robot apparatus 1 which is configured by coupling the head member unit 2, the main member unit 3 and the manipulator member unit 4, the present invention is not limited by the embodiment and the present invention may be applied to a robot apparatus which is configured by coupling a main member unit and a manipulator member unit or other various coupling units.

Though the first embodiment is described above as a case wherein the CPUs 22 and 30 are disposed in each of the head member units 2A through 2C to be coupled with the main member unit 3 as shown in Figure 3 and the manipulator member units 4A through 4D, the present invention is not limited by the embodiment and the CPU 12 of the main member unit 4 may be configured to perform the updating processing of the learned data stored in the memory sections 47 and 29 without disposing the CPUs in the head member units 2A through 2C or the manipulator member units 4A through 4D, for example, as shown in Figure 6.

Though the first embodiment is described above as a case wherein the learned data of the units are stored in the memory sections 45, 47 and 49 of the units, the present invention is not limited by the embodiment and learned data of other units may be stored together with sensor ID or the like, for example, attached to the sensors 15, 20 and 28.

Though the second embodiment is described above as a case wherein the present invention is applied to the robot apparatus 1 configured as shown in Figures 1 and 6, the present invention is not limited by the embodiment and the present invention is applicable widely to other robot apparatuses with various configurations.

Though the second embodiment is described above as a case wherein the fused learned data (data of the action determining table T_{a(w,s)B}') obtained by exchanging the unit is written over the original learned data of the new unit used after the exchange, the present invention is not limited by the embodiment and the fused learned data (data of the action determining table T_{a(w,s)B}') may be maintained by the new unit separately from the original learned data of the new unit used after the exchange.

### Industrial Applicability

The present invention is utilizable for a robot apparatus which is configured by combining and coupling desired coupling units out of coupling units which exist in a plurality of kinds and autonomously takes predetermined actions on the basis of input information input from outside.

## Claims

1. A robot apparatus which is configured by combining and coupling desired coupling units out of coupling units existing in a plurality of kinds and autonomously takes predetermined actions on the basis of input information input from outside, characterized by comprising: memory means which is built in said coupling units and stores as learned data said input information and a history of actions of the coupling units themselves in response to said input information out of said input information and histories of actions of the robot apparatus as a whole in response to said input information.

2. The robot apparatus according to claim 1, characterized by storing said learned data for performing actions peculiar to said coupling unit in response to said input information out of said coupling units existing in the plurality of kinds.

3. A main member unit of a robot apparatus which is configured by selecting and coupling a main member unit and coupling units desired respectively out of main member units existing in a plurality of kinds and coupling units existing in a plurality of kinds, and autonomously taking predetermined actions on the basis of input information input from outside, characterized by comprising: learned data fusing means which reads out learned data from memory means of said coupling units which are currently coupled, generates new learned data by fusing said learned data which is read out with learned data of a coupling unit which was coupled previously and stores generated learned data into said memory means of said coupling units which are currently coupled.

4. A coupling unit of a robot apparatus which is configured by combining and coupling desired coupling units out of coupling units existing in a plurality of kinds and autonomously taking predetermined actions on the basis of input information input from outside, characterized by comprising: memory means which stores as learned data said input information and a history of actions of said coupling units themselves in response to said input information out of said input information and histories of actions of the robot apparatus as a whole in response to said input information.

5. The coupling unit according to claim 4, characterized by storing said learned data for performing actions peculiar to said coupling units in response to said input information out of said coupling units existing in the plurality of kinds.

6. A robot apparatus which is configured by combining and coupling desired coupling units out of coupling units existing in a plurality of kinds and takes predetermined actions on the basis of input information given from outside, characterized by comprising:
action control means which takes an action corresponding to a combination of said coupling units on the basis of said input information given from outside; memory means which stores as combined learned data the combination of said coupling units and a history of the action of said action control means taken on the basis of said input information; and
output means which reads out said combined learned data from said memory means and outputs the data outside as occasion demands.

7. The robot apparatus according to claim 6, characterized in that: said memory means is disposed in each of said coupling units which are combined to configure said robot apparatus.
